(19) **Europäisches Patentamt / European Patent Office / Office européen des brevets**

(11) **EP 4 358 171 A1**

(12) **EUROPEAN PATENT APPLICATION**

(43) Date of publication:
**24.04.2024 Bulletin 2024/17**

(21) Application number: **23204810.8**

(22) Date of filing: **20.10.2023**

(51) International Patent Classification (IPC):
$H01M\ 4/04^{(2006.01)}$    $H01M\ 4/36^{(2006.01)}$
$H01M\ 4/62^{(2006.01)}$    $H01M\ 4/66^{(2006.01)}$
$H01M\ 4/70^{(2006.01)}$    $H01M\ 10/0525^{(2010.01)}$
$H01M\ 4/133^{(2010.01)}$    $H01M\ 4/134^{(2010.01)}$
$H01M\ 4/1393^{(2010.01)}$    $H01M\ 4/1395^{(2010.01)}$
$H01M\ 4/38^{(2006.01)}$    $H01M\ 4/587^{(2010.01)}$

(52) Cooperative Patent Classification (CPC):
**H01M 4/661; H01M 4/0404; H01M 4/364;**
**H01M 4/366; H01M 4/622; H01M 4/667;**
**H01M 4/668; H01M 4/669; H01M 4/70;**
**H01M 10/0525;** H01M 4/133; H01M 4/134;
H01M 4/1393; H01M 4/1395; H01M 4/386;    (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.10.2022 KR 20220136754**

(71) Applicants:
- **Samsung SDI Co., Ltd.**
  **Yongin-si, Gyeonggi-do 17084 (KR)**
- **IUCF-HYU (INDUSTRY-UNIVERSITY COOPERATION**
  **FOUNDATION HANYANG UNIVERSITY)**
  **Seoul 04763 (KR)**

(72) Inventors:
- **PARK, Keemin**
  **04762 Seoul (KR)**

- **JUNG, Hyeseung**
  **17084 Yongin-si (KR)**
- **AN, Hoyong**
  **17084 Yongin-si (KR)**
- **LEE, Kyuseo**
  **17084 Yongin-si (KR)**
- **HAN, Seung-Hun**
  **17084 Yongin-si (KR)**
- **KIM, Soochan**
  **17084 Yongin-si (KR)**
- **CHO, Chaewoong**
  **17084 Yongin-si (KR)**
- **MYEONG, Seungcheol**
  **04761 Seoul (KR)**
- **SONG, Taeseup**
  **03180 Seoul (KR)**
- **PAIK, Ungyu**
  **06289 Seoul (KR)**

(74) Representative: **Marks & Clerk LLP**
**15 Fetter Lane**
**London EC4A 1BW (GB)**

(54) **CURRENT COLLECTOR FOR RECHARGEABLE LITHIUM BATTERY, AND ELECTRODE AND RECHARGEABLE LITHIUM BATTERY INCLUDING THE SAME**

(57) Provided are a current collector for a rechargeable lithium battery and an electrode and a rechargeable lithium battery including the same. The current collector for a rechargeable lithium battery includes a substrate and a binder coating layer on a surface of the substrate, wherein the binder coating layer includes a water-soluble binder selected from a rubber-based binder, a polymer resin binder, or a combination thereof.

FIG. 1B

EP 4 358 171 A1

(52) Cooperative Patent Classification (CPC): (Cont.)
H01M 4/587

**Description**

**BACKGROUND**

**1. Field**

A current collector for a rechargeable lithium battery, and an electrode and a rechargeable lithium battery and the same are disclosed.

**2. Description of the Related Art**

As a demand on portable electronics such as a laptop, a cellphone, and the like is sharply increased, and also, a demand on an electric vehicle, an electric cart, an electric wheelchair, a motorbike, and the like is increased, research on a repetitively chargeable/dischargeable high performance rechargeable battery is actively being made.

In addition, as gradual depletion of carbon energy and an interest in environmental conservation are increased, a demand on a hybrid electric vehicle (HEV) and an electric vehicle (EV) is being gradually increased around the world. Accordingly, as more interest and research on a vehicle battery as a core part of HEV or EV is concentrated, high-rate charge technology of fast charging a battery needs to be urgently developed. Particularly, the high-rate charge is very important in EV having no additional energy source.

**SUMMARY**

Studies on high-capacity active materials have been conducted for rechargeable lithium batteries with enhanced electrochemical performances, while the importance of polymer binders has been underestimated because of their low content in an electrode and negligible electrochemical properties.

Polymer binders are indispensable additives that have a significant impact on dispersibility of a slurry, physicochemical properties of the electrode, and subsequent electrochemical performances of the rechargeable lithium batteries.

Additionally, the polymer binders are insulating materials that not only reduce electrical conductivity but also block pores of the electrode, reducing the movement of lithium ions through the pores.

An embodiment provides a current collector for a rechargeable lithium battery which improves adhesion between the negative electrode active material layer and the current collector by improving the electrode structure, and improving electrochemical properties such as high-rate charging characteristics and cycle-life characteristics of the rechargeable lithium battery

Another embodiment provides an electrode and a rechargeable lithium battery including the current collector.

According to an embodiment, a current collector for a rechargeable lithium battery includes a substrate and a binder coating layer on a surface of the substrate,

wherein the binder coating layer includes a water-soluble binder selected from a rubber-based binder, a polymer resin binder, or a combination thereof.

According to another embodiment, an electrode for a rechargeable lithium battery includes the aforementioned current collector and an electrode active material layer on the current collector,

wherein the electrode active material layer includes an electrode active material and a polymer binder, and
the polymer binder includes a water-soluble binder and an ionic polymer.

According to another embodiment, a rechargeable lithium battery including the electrode for the rechargeable lithium battery is provided.

The electrode manufactured according to the above manufacturing method has improved electrochemical performance and can be usefully applied to rechargeable lithium batteries.

At least some of the above and other features of the invention are set out in the claims.

**BRIEF DESCRIPTION OF THE DRAWINGS**

FIG. 1A is a view showing a structure of a negative electrode manufactured by a conventional method of manufacturing a negative electrode, and FIG. 1B is a view showing a structure of a negative electrode manufactured by a method of manufacturing a negative electrode according to an embodiment.

FIGS. 2 to 5 are schematic views illustrating rechargeable lithium batteries according to embodiments.

FIG. 6 is a view showing electrochemical impedance spectroscopy (EIS) analysis results of symmetric cells respectively including Comparative Example 1B (3.0) and Comparative Example 2B (5.5).

FIG. 7 is a graph showing voltage profiles of half-cells respectively including Comparative Example 1B (3.0) and Comparative Example 2B (5.5) at 2.0 C current density after the 0.1 C formation cycle.

FIG. 8 shows differential capacity vs. voltage (-dQ/dV vs. V) curves of the half-cells respectively including Comparative Example 1B (3.0) and Comparative Example 2B (5.5) at a discharge rate of 2.0 C.

FIG. 9 is a view showing back scattered electron-scanning electron microscopy (BSE-SEM) images of Cu current collectors according to Comparative Example 1A and Examples 1A to 5A.

FIG. 10 is a view showing electrolyte permeability evaluation results of negative electrodes according to Example 3B-2 (5.5) and Comparative Example 2B (5.5).

FIG. 11 is a view showing voltage profiles of the half-cells according to Comparative Example 3H-2 (5.5) and Comparative Example 2H (5.5) when discharged at a high current density of 2.0 C.

FIG. 12 is a graph showing -dQ/dV vs. V curves of the half-cells according to Example 3H-2 (5.5) and Comparative Example 2H (5.5).

FIG. 13 is a view showing electrochemical impedance spectroscopy (EIS) analysis results of the half-cells according to Example 3H-2 (5.5) and Comparative Example 2H (5.5).

FIG. 14A is a graph showing charge capacity according to a rate of the full-cells of Example 3F-2 (3.0) and Comparative Example 1F (3.0), and FIG. 14B is a graph showing charge capacity according to a rate of the full-cells of Example 3F-2 (5.5) and Comparative Example 2F (5.5).

FIGS. 15A and 15B are graphs showing cycle-life characteristics of the full-cells of Example 3F-2 (3.0) and Comparative Example 1F (3.0) at 0.5 C and 2.0 C.

FIGS. 15C and 15D are graphs showing cycle-life characteristics of the full-cells of Example 3F-2 (5.5) and Comparative Example 2F (5.5) at 0.5 C and 2.0 C.

## DETAILED DESCRIPTION

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, laminate, composite, copolymer, alloy, blend, reaction product, and the like of the constituents.

Herein, it should be understood that terms such as "comprises," "includes," or "have" are intended to designate the presence of an embodied feature, number, step, element, or a combination thereof, but do not preclude the possibility of the presence or addition of one or more other features, numbers, steps, elements, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In the present disclosure, if (e.g., when) particles are spherical, "size" or "particle diameter" indicates a particle diameter or an average particle diameter, and if (e.g., when) the particles are non-spherical, the "size" or "particle diameter" indicates a major axis length or an average major axis length. That is, if (e.g., when) particles are spherical, "particle diameter" indicates a particle diameter, and when the particles are non-spherical, the "particle diameter" indicates a major axis length. The size or diameter of the particles may be measured utilizing a scanning electron microscope or a particle size analyzer. As the particle size analyzer, for example, HORIBA, LA-950 laser particle size analyzer, may be utilized. When the size of the particles is measured utilizing a particle size analyzer, the average particle diameter (or size) is referred to as D50. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size.

Herein, "or" is not to be construed as an exclusive meaning, for example, "A or B" is construed to include A, B, A+B, and the like.

As used herein, the term "and/or" includes any and all combinations of one or more of the associated listed items. As used herein, expressions such as ""at least one of"," "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

As used herein, the term "substantially" and similar terms are used as terms of approximation and not as terms of degree, and are intended to account for the inherent deviations in measured or calculated values that would be recognized by those of ordinary skill in the art. Also, the term "about" and similar terms, when used herein in connection with a numerical value or a numerical range, are inclusive of the stated value and mean within an acceptable range of deviation for the particular value as determined by one of ordinary skill in the art, considering the measurement in question and the error associated with measurement of the particular quantity (e.g., the limitations of the measurement system). For example, "about" may mean within one or more standard deviations, or within $\pm$ 30%, 20%, 10%, 5% of the stated value. Also, any numerical range recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

Hereinafter, a current collector for a rechargeable lithium battery according to an embodiment will be described.

The current collector for a rechargeable lithium battery includes a substrate and a binder coating layer on a surface of the substrate, wherein the binder coating layer includes a water-soluble binder selected from a rubber-based binder, a polymer resin binder, or a combination thereof.

The substrate may include a copper foil, a nickel foil, a stainless steel foil, a titanium foil, a polymer substrate coated with a conductive metal, or an aluminium foil.

The rubber-based binder may include, for example, a styrene-butadiene rubber, an acrylated styrene-butadiene rubber, an acrylonitrile-butadiene rubber, an acrylic rubber, a butyl rubber, a fluorine rubber, or a combination thereof. The polymer resin binder may include, for example, polyethylene oxide, polyvinylpyrrolidone, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, or a combination thereof.

The water-soluble binder may be coated on the substrate in an amount of about 5 to about 40 $\mu$g cm$^{-2}$. For example, the water-soluble binder may be coated in an amount of greater than or equal to about 6 $\mu$g cm$^{-2}$, or greater than or equal to about 7 $\mu$g cm$^{-2}$, and less than or equal to about 39 $\mu$g cm$^{-2}$, less than or equal to about 38 $\mu$g cm$^{-2}$, less than or equal to about 37 $\mu$g cm$^{-2}$, less than or equal to about 36 $\mu$g cm$^{-2}$, less than or equal to about 35 $\mu$g cm$^{-2}$, less than or equal to about 34 $\mu$g cm$^{-2}$, less than or equal to about 33 $\mu$g cm$^{-2}$, less than or equal to about 32 $\mu$g cm$^{-2}$, less than or equal to about 31 $\mu$g cm$^{-2}$, or less than or equal to about 30 $\mu$g cm$^{-2}$. Within the above range, the adhesive strength with the electrode active material layer can be improved and good electrical conductivity of the current collector can be secured.

The coating layer may have a certain pattern, and for example may be a patterned coating layer.

The pattern may be island-shaped (e.g., pattern in the form of islands), linear (e.g., pattern in the form of lines), or wavy-shaped (e.g., pattern in the form of waves), but is not limited thereto.

The coating layer may be formed by coating a slurry for a current collector in which a water-soluble binder is dispersed in an aqueous solvent. The binder coating layer may be formed by a printing method (e.g., bar coating, inkjet printing, screen printing, gravure printing).

Another embodiment provides an electrode for a rechargeable lithium battery including the aforementioned current collector and an electrode active material layer on the current collector, wherein the electrode active material layer includes an electrode active material and a polymer binder, and the polymer binder includes a water-soluble binder and an ionic polymer.

The electrode active material may be a negative electrode active material or a positive electrode active material.

The negative electrode active material may include a carbon-based negative electrode active material that is a material that reversibly intercalates/deintercalates lithium ions, a silicon-carbon composite, or a combination thereof.

The carbon-based negative electrode active material may include crystalline carbon, amorphous carbon, or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The carbon-based negative electrode active material may be in the form particles and have an average particle diameter (D50) of, for example, about 1 $\mu$m to about 50 $\mu$m, for example about 1 $\mu$m to about 40 $\mu$m, about 1 $\mu$m to about 30 $\mu$m, about 1 $\mu$m to about 25 $\mu$m, about 1 $\mu$m to about 20 $\mu$m, about 2 $\mu$m to about 50 $\mu$m, about 5 $\mu$m to about 50 $\mu$m, about 10 $\mu$m to about 50 $\mu$m, or about 15 $\mu$m to about 50 $\mu$m. When the carbon-based negative electrode active material with the particle diameter ranges is used, energy density may be increased, while sufficient voids between particles may be simultaneously secured. Herein, the average particle diameter is obtained by randomly selecting 20 carbon-based negative electrode active material particles from an electron microscope image of the electrode to measure each particle diameter and obtain a particle diameter distribution therefrom and then, taking a particle diameter (D50) at 50 volume% of a cumulative volume from the particle diameter distribution.

The silicon-carbon composite may include a silicon-based material and amorphous carbon or crystalline carbon in addition to the silicon-based material and the amorphous carbon. Herein, the silicon-based material may be silicon (Si) or a silicon oxide ($SiO_x$, $0 < x < 2$).

When the silicon-carbon composite includes the silicon-based material and the amorphous carbon, the silicon-carbon composite may be an assembly of the silicon-based material and the amorphous carbon or the silicon-based material coated with the amorphous carbon on the surface. Herein, the silicon-based material and the amorphous carbon may be mixed in a weight ratio of about 1 : 99 to about 60 : 40.

When the silicon-carbon composite includes the crystalline carbon in addition to the silicon-based material and the amorphous carbon, the crystalline carbon and the silicon-based material are assembled to form an assembly, on which the amorphous carbon may be coated. Herein, a content of the silicon-based material may be about 1 wt% to about 60 wt%, or for example, about 3 wt% to about 60 wt% based on 100 wt% of the total silicon-carbon composite. In addition, in the silicon-carbon composite, a content of the amorphous carbon may be about 20 wt% to about 60 wt% based on 100 wt% of the total silicon-based negative electrode active material, and a content of the crystalline carbon may be about 20 wt% to about 60 wt% based on 100 wt% of the total silicon-carbon composite.

The silicon-based material may have a particle diameter of about 10 nm to about 30 $\mu$m, for example about 10 nm to about 1000 nm, or for example, about 20 nm to about 150 nm.

When the amorphous carbon is coated to form a layer, the amorphous carbon may have a thickness of about 5 nm to about 100 nm.

The negative electrode active material layer may include other negative electrode active materials in addition to the aforementioned negative electrode active material (the carbon-based negative electrode active material, silicon-carbon composite, or combination thereof). For example, the negative electrode active material may further include a silicon-based negative electrode active material and/or a tin-based negative electrode active material. In this case, the capacity of the negative electrode can be maximized.

The silicon-based negative electrode active material may include silicon, $SiO_x$ ($0 < x < 2$), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof).

The tin-based negative electrode active material may include for example tin, tin oxide (e.g., $SnO_x$ ($0 < x \leq 2$ or $1 < x \leq 2$)), a Sn-R alloy (where R is selected from an alkali metal, an alkaline-earth metal, a Group 13 element, a Group 14 element (excluding Sn), a Group 15 element, a Group 16 element, a transition metal, a rare earth element, and a combination thereof), or a combination thereof. The elements Q and R may include, for example, Mg, Ca, Sr, Ba, Ra, Sc, Y, Ti, Zr, Hf, Rf, V, Nb, Ta, Db, Cr, Mo, W, Sg, Tc, Re. , Bh, Fe, Pb, Ru, Os, Hs, Rh, Ir, Pd, Pt, Cu, Ag, Au, Zn, Cd, B, Al, Ga, Sn, In, Tl, Ge, P, As, Sb , Bi, S, Se, Te, or Po.

The silicon-based negative electrode active material and/or tin-based negative electrode active material may be included in an amount of about 0 wt% to about 60 wt%, about 1 wt% to about 50 wt%, about 1 wt% to about 40 wt%, about 1 wt% to about 30 wt%, or about 5 wt% to about 20 wt% based on 100 wt% of the negative electrode active material in the negative electrode active material layer. Herein, a cost may not only be reduced, but also high capacity may be achieved.

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free lithium nickel-manganese-based oxide, or a combination thereof.

As an example, the following compounds represented by any one of the following chemical formulas may be used. $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_bO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); or $Li_aFePO_4$ ($0.90 \leq a \leq 1.8$).

In the above chemical formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and $L^1$ is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

In the electrode active material layer, a content of the electrode active material may be about 80 wt% to about 99.5 wt%, for example, about 85 wt% to about 99 wt%, about 90 wt% to about 99 wt%, or about 95 wt% to about 98 wt% based on a total weight of the electrode active material layer.

The polymer binder included in the electrode active material layer includes a water-soluble binder and an ionic polymer.

The water-soluble binder may be the same as the water-soluble binder coated on the substrate of the aforementioned current collector. The water-soluble binder may include a rubber-based binder, a polymer resin binder, or a combination thereof. The rubber-based binder may include, for example a styrene-butadiene rubber, an acrylated styrene-butadiene rubber, an acrylonitrile-butadiene rubber, an acrylic rubber, a butyl rubber, a fluorine rubber, or a combination thereof. The polymer resin binder may include, for example, polyethylene oxide, polyvinylpyrrolidone, polyacrylonitrile, an ethylene propylene diene copolymer, polyvinylpyridine, chlorosulfonated polyethylene, latex, a polyester resin, an acrylic resin, a phenol resin, an epoxy resin, a polyvinyl alcohol, or a combination thereof.

The water-soluble binder may be included in an amount of about 0.1 wt% to about 10 wt%, for example about 0.5 wt% to about 5 wt%, or about 1 wt% to about 3 wt%, based on 100 wt% of the electrode active material layer.

The ionic polymer may be a cellulose-based compound. The ionic polymer may have a negative charge in an aqueous medium.

The cellulose-based compound may include, for example, carboxylmethyl cellulose, hydroxypropylmethyl cellulose, methyl cellulose, an alkali metal salt thereof, or a combination thereof. The alkali metal may be Li, Na, K, etc. The ionic polymer may be included in an amount of about 0.1 wt% to about 3 wt%, or about 0.1 wt% to about 1.5 wt% based on 100 wt% of the electrode active material layer.

The electrode active material layer may optionally include a conductive material in addition to the negative electrode active material and the polymer binder. The conductive material may be used to impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof. The conductive material may be included in an amount of about 0.1 wt% to about 10 wt%, for example, about 0.5 wt% to about 5 wt%, or about 1 wt% to about 3 wt% based on 100 wt% of the electrode active material layer.

A thickness of the electrode active material layer is not particularly limited but may be about 20 $\mu$m to about 500 $\mu$m according to intended uses or standards, for example, about 20 $\mu$m to about 300 $\mu$m, about 20 $\mu$m to about 200 $\mu$m, or about 30 $\mu$m to about 100 $\mu$m.

The electrode active material layer may be formed by coating slurry for forming an electrode active material layer including an electrode active material, a binder, and optionally, a conductive material on a current collector including a binder coating layer and then, drying and compressing it.

The slurry for forming an electrode active material layer may have a water-soluble binder ranging from about 30 $\mu$g cm$^{-2}$ to about 155 $\mu$g cm$^{-2}$. The water-soluble binder in the slurry for coating a current collector may be greater than or equal to about 40 $\mu$g cm$^{-2}$, greater than or equal to about 50 $\mu$g cm$^{-2}$, or greater than or equal to about 60 $\mu$g cm$^{-2}$ and less than or equal to 140 $\mu$g cm$^{-2}$, less than or equal to about 135 $\mu$g cm$^{-2}$, less than or equal to about 130 $\mu$g cm$^{-2}$, less than or equal to about 125 $\mu$g cm$^{-2}$, less than or equal to about 120 $\mu$g cm$^{-2}$, less than or equal to about 110 $\mu$g cm$^{-2}$, less than or equal to about 100 $\mu$g cm$^{-2}$, less than or equal to about 90 $\mu$g cm$^{-2}$, or less than or equal to about 80 $\mu$g cm$^{-2}$. Within the ranges, adhesive strength with the electrode active material layer may not only be improved, but also sufficient electrical conductivity of the current collector may be secured.

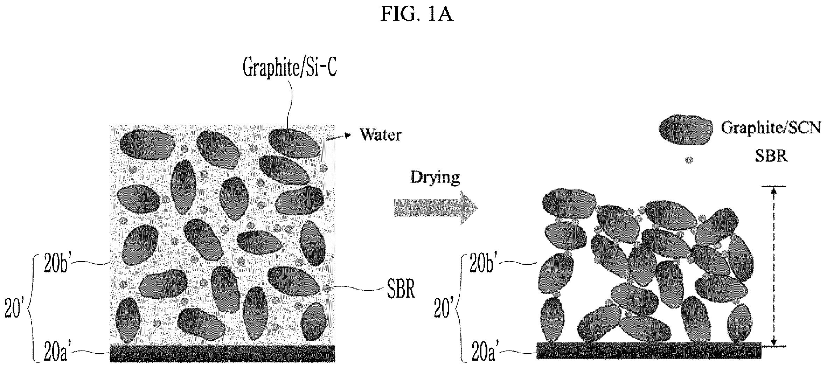

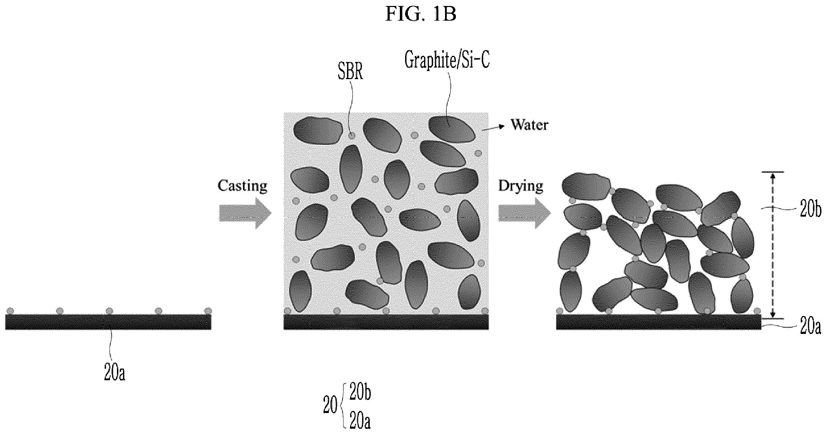

Hereinafter, a method of manufacturing the negative electrode for a rechargeable lithium battery is described with reference to FIGS. 1A and 1B. FIG. 1A is a view showing a structure of a negative electrode manufactured by a conventional method of manufacturing a negative electrode, and FIG. 1B is a view showing a structure of a negative electrode manufactured by a method of manufacturing a negative electrode according to an embodiment.

In FIGS. 1A and 1B, an example of using a graphite and silicon-carbon composite (Si-C composite) as the electrode active material, a carboxylmethyl cellulose (CMC)/styrene-butadiene rubber (SBR) binder (hereinafter, referred to as a CMC/SBR polymer binder) as the polymer binder, and a Cu foil as the substrate of the current collector (hereinafter, also referred to as a Cu current collector) will be illustrated. For convenience, CMC is not depicted in FIGS. 1A and 1B.

CMC/SBR polymer binder is a water-based binder that is widely used in water-based electrode systems because it is environmentally friendly and has excellent dispersion characteristics. The carboxymethyl groups of CMC, which are derived from hydroxyl (-OH) groups on cellulose, contribute to the aqueous solubility of CMC compared with insoluble cellulose. The carboxymethyl and hydroxyl groups of CMC form hydrogen bonding with water, allowing CMC to act as a thickener in an aqueous slurry. The carboxymethyl group of CMC can be dissociated into a carboxylate anion ($-CH_2COO^-$) in an aqueous medium. Therefore, CMC adsorbed on a graphite surface via hydrophobic interaction creates a negative charge on graphite, making an electrostatically repulsive force between graphite particles. This repulsive force can improve the dispersibility of a slurry by suppressing the agglomeration of graphite particles.

SBR is a synthetic rubber including styrene and butadiene units. Because SBR has high flexibility, excellent heat resistance, and a strong binding force, a negative electrode fabricated with SBR could have enhanced physicochemical properties. In particular, since an aromatic ring of SBR interacts with the Cu current collector, SBR coated on the Cu current collector may be fixed onto the surface of the Cu current collector through the drying process of the slurry. In addition, when also included in the negative electrode, SBR provides adhesion between the negative active material layer and the Cu current collector and serves as a primary binder in the negative electrode.

As shown in FIG. 1A, conventionally, the negative electrode active material (graphite/SiC) is dispersed in an aqueous medium with a low binder content and then, coated on the Cu current collector 20a' and dried to obtain a negative electrode 20'. Herein, the polymer binder (SBR) moves to the negative electrode surface due to evaporation of the solvent by a capillary force during the drying process. This binder migration behavior causes non-uniform binder distribution in a longitudinal direction of the negative electrode 20' and deteriorates adhesion between the negative electrode active material layer 20b' and the Cu current collector 20a'. Specifically, a relatively small amount of binder is present at the contact surface between the negative electrode active material layer 20b' and the Cu current collector 20a', thereby reducing the adhesion between the negative electrode active material layer 20b' and the Cu current collector 20a'. Furthermore, when a large amount of the binder is present on the surface of the negative electrode 20', it may block pores and hinder easy movement of an electrolyte, which deteriorates Li-ion kinetics and high-rate charging characteristics of the negative electrode 20'. Accordingly, the binder migration behavior is required to be controlled during the drying process to improve electrochemical characteristics of rechargeable lithium batteries. As the areal capacity of the negative electrode increases, as in the reference evaluation example described later, a drying time for complete evaporation of the solvent becomes longer, and thus problems caused by the migration behavior of the binder may become more serious.

As shown in FIG. 1B, when the slurry for forming a negative active material layer is coated on the Cu current collector 20a coated with the SBR polymer, the coated SBR polymer may not move to the surface of the negative electrode 20 but be fixed onto the contact surface with the negative active material layer 20b to improve adhesion between the negative active material layer 20b and the Cu current collector 20a. The Cu current collector 20a coated with the SBR polymer may reduce the binder amount used in the negative active material layer 20b and thereby, reduce pore blocking behaviors in the negative active material layer 20b, resultantly increasing Li-ion kinetics. Accordingly, rechargeable lithium batteries with high energy density may be provided.

The negative electrode has improved electrochemical performance and thus may be usefully applied to rechargeable lithium batteries.

The descriptions of the negative electrode can be equally applied to the positive electrode manufactured by using a water-soluble binder and an ionic polymer as a binder.

The MacMullin number ($N_M$) of the negative electrode calculated using Equation 1 may be less than or equal to about 26, less than or equal to about 25, less than or equal to about 24, or less than or equal to about 23.5:

[Equation 1]

$$N_M = \frac{R_{ion} \cdot A \cdot \sigma_0}{d} \quad (1)$$

wherein $R_{ion}$ is the ionic resistance of the electrode ($\Omega$), A is an area of the electrode ($cm^2$), $\sigma_o$ is the ionic conductivity of the electrolyte ($S\ cm^{-1}$), and d is the thickness of the electrode ($\mu m$). $R_{ion}$ is obtained from EIS (Electrochemical Impedance Spectroscopy) analysis at an open-circuit voltage of a cell with a frequency range of 100 kHz to 1Hz and an amplitude of 20 mV by using Potentiostat (ZIVE BP2A, Won-ATech Co., Ltd., Korea). The ionic conductivity is measured at room temperature (25 °C).

A permeation time of an electrolyte (PANAX StarLyte, a solution prepared by adding a 10 wt% of an fluoroethylene carbonate (FEC) additive to ethylene carbonate/dimethyl carbonate/diethyl carbonate (EC/DMC/DEC =1/1/2 volume ratio) containing 1.5 M $LiPF_6$) thereinto may be less than or equal to about 90 seconds, for example, less than or equal to about 87 seconds, less than or equal to about 86 seconds, or less than or equal to about 85 seconds.

The electrode active material layer may further include a conductive material in addition to the electrode active material and the polymer binder. The conductive material may be used to impart conductivity (e.g., electrical conductivity) to the electrode. Any material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminium, silver, etc., in a form of a metal powder or a metal fiber; a conductive polymer such as a polyphenylene derivative; or a mixture thereof.

An embodiment provides a rechargeable lithium battery including a negative electrode, a positive electrode, and an electrolyte. In the rechargeable lithium battery, the negative electrode may be a negative electrode manufactured by applying an electric field as described above, and/or the positive electrode may be a positive electrode manufactured by applying an electric field as described above.

The electrolyte may include a non-aqueous organic solvent and a lithium salt.

The non-aqueous organic solvent serves as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond), and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethane sulfonate, lithium difluorobis(oxalato)phosphate (LiDFOB), and lithium bis(oxalato) borate (LiBOB).

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film including any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, SrTiOs, BaTiOs, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

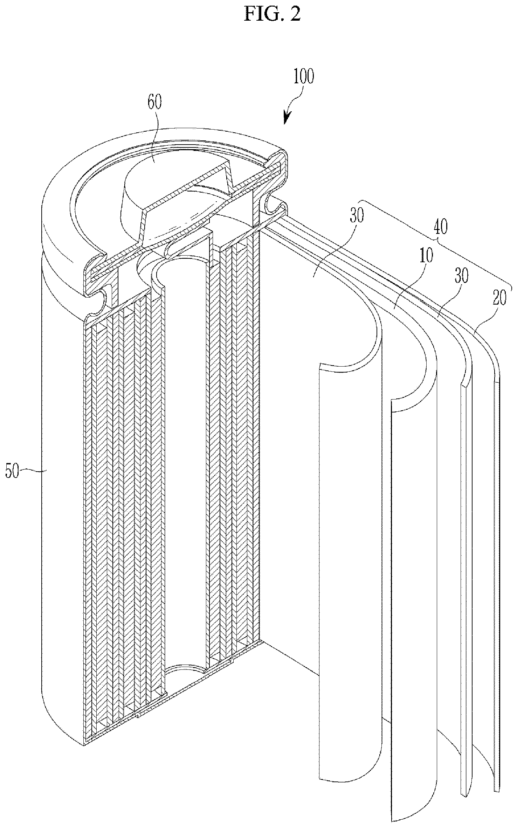

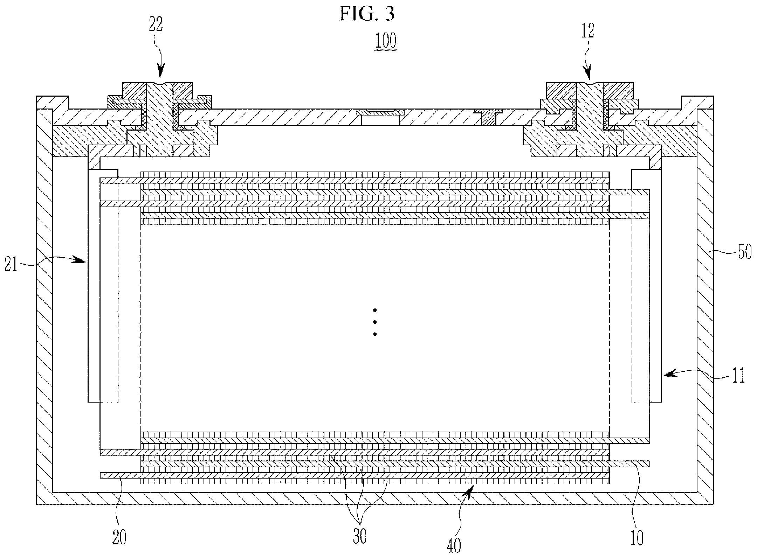

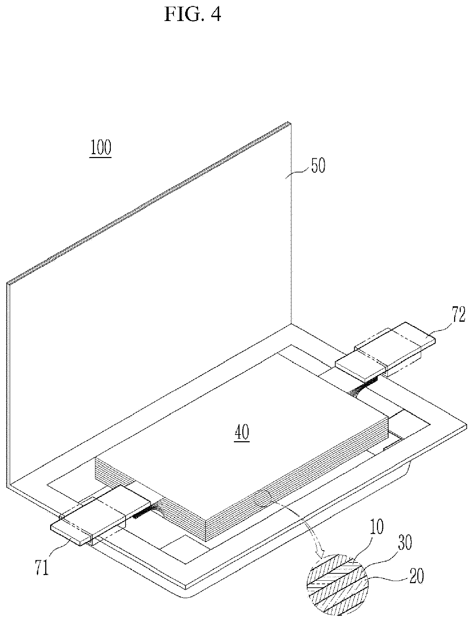

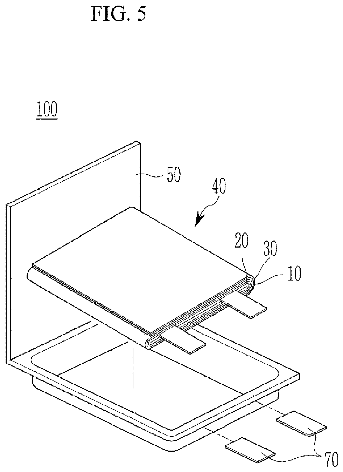

The rechargeable lithium battery may be classified into cylindrical, prismatic, pouch, or coin-type batteries, and the like depending on their shape. FIGS. 2 to 5 are schematic views illustrating rechargeable lithium batteries according to embodiments. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to an embodiment may be applied to automobiles, mobile phones, and/or various types of electric devices, as non-limiting examples.

The following Examples and Comparative Examples are provided in order to highlight characteristics of one or more embodiments, but it will be understood that the Examples and Comparative Examples are not to be construed as limiting the scope of the embodiments. Further, it will be understood that the embodiments are not limited to the particular details described in the Examples and Comparative Examples.

**Examples 1A to 5A: Preparation of Current Collectors Coated with SBR Binder**

Each current collector coated with an SBR binder according to Examples 1A to 5A was prepared by bar-coating 40 wt% SBR emulsion (a dispersive medium: deionized water) on a Cu current collector (a thickness: 8 $\mu$m), so that the SBR binder might be coated in each amount of 7, 13, 27, 45, and 87 $\mu$g cm$^{-2}$, and drying it in a 110 °C oven for 10 minutes. An uncoated Cu current collector was used as Comparative Example 1A.

**Example 1B-1 (5.5) to 5B-1 (5.5): Manufacture of Negative Electrodes**

Slurry for a negative active material layer was prepared by adding graphite, a silicon-carbon composite, a 1.1 wt% CMC aqueous solution, and 40 wt% SBR emulsion (a dispersive medium: deionized water) in a weight ratio of 87.85:10.91:1.01:0.23 based on a solid content to deionized water. The silicon-carbon composite was an assembly containing Si, graphite, and amorphous carbon (pitch carbonization product) in a weight ratio of 30:40:30.

The slurry for forming a negative active material layer was mixed at 2000 rpm for 10 minutes by using a Thinky mixer. The slurry for forming a negative active material layer in a coating amount of 13 mg cm$^{-2}$ was coated on each of the Cu current collector (a thickness: 8 $\mu$m) according to Examples 1A to 5A by using a doctor blade and then, dried 110 °C for 20 minutes.

After the drying, the obtained negative electrode was calendared to manufacture each negative electrode according to Examples 1B-1 (5.5) to 5B-1 (5.5) having a target density of 1.68 g cc$^{-1}$ and an areal capacity of 5.5 mAh cm$^{-2}$.

**Examples 1B-2 (5.5) to 5B-2 (5.5): Manufacture of Negative Electrodes**

Each negative electrode according to Examples 1B-2 (5.5) to 5B-2 (5.5) was manufactured in the same manner as in Examples 1B-1 (5.5) to 5B-1 (5.5) except that the slurry for forming a negative active material layer was prepared by adding graphite, a silicon-carbon composite, a 1.1 wt% CMC aqueous solution, and 40 wt% SBR emulsion (a dispersive medium: deionized water) in a weight ratio of 87.52:10.87:1.01:0.60 based on a solid content to deionized water.

**Examples 1B-3 (5.5) to 5B-3 (5.5): Manufacture of Negative Electrodes**

Each negative electrode according to Examples 1B-3 (5.5) to 5B-3 (5.5) was manufactured in the same manner as in Examples 1B-1 (5.5) to 5B-1 (5.5) except that the slurry for forming a negative active material layer was prepared by adding graphite, a silicon-carbon composite, a 1.1 wt% CMC aqueous solution, and 40 wt% SBR emulsion (a dispersive medium: deionized water) in a weight ratio of 87.21:10.83:1.0:0.96 based on a solid content to deionized water.

**Examples 1B-4 (5.5) to 5B-4 (5.5): Manufacture of Negative Electrodes**

Each negative electrode according to Examples 1B-4 (5.5) to 5B-4 (5.5) was manufactured in the same manner as in Examples 1B-1 (5.5) to 5B-1 (5.5) except that the slurry for forming a negative active material layer was prepared by adding graphite, a silicon-carbon composite, a 1.1 wt% CMC aqueous solution, and 40 wt% SBR emulsion (a dispersive medium: deionized water) in a weight ratio of 87.0:10.8:1.0:1.2 based on a solid content to deionized water.

**Examples 1B-1 (3.0) to 5B-4 (3.0): Manufacture of Negative Electrodes**

Each negative electrode according to Examples 1B-1 (3.0) to 5B-4 (3.0) was manufactured in the same manner as in Examples 1B-1 (5.5) to 5B-1 (5.5) except that the loading amount of the negative active material layer for the Cu current collector was 7 mg cm$^{-2}$, and the negative electrode had an areal capacity of 3.0 mAh cm$^{-2}$.

**Comparative Example 1B (3.0): Manufacture of Negative Electrode**

Slurry for forming a negative active material layer was prepared by adding graphite, a silicon-carbon composite, a 1.1 wt% CMC aqueous solution, and 40 wt% SBR emulsion (a dispersive medium: deionized water) in a weight ratio of 87.2:10.9:1.0:0.9 based on a solid content to deionized water. The silicon-carbon composite was an assembly containing Si, graphite, and amorphous carbon (pitch carbonization product) in a weight ratio of 30:40:30.
The slurry for forming a negative active material layer was mixed at 2000 rpm for 10 minutes by using a Thinky mixer. Subsequently, the slurry for forming a negative active material layer was coated on a Cu current collector (a thickness: 8 $\mu$m) by using a doctor blade and dried at 110 °C for 20 minutes.
A loading amount of a negative active material layer formed thereof on the Cu current collector was 7 mg cm$^{-2}$.
After the drying, a negative electrode obtained therefrom was calendared to have a target density of 1.68 g cc$^{-1}$.

**Comparative Example 2B (5.5): Manufacture of Negative Electrode**

Slurry for forming a negative active material layer was prepared by adding graphite, a silicon-carbon composite, a 1.1 wt% CMC aqueous solution, and 40 wt% SBR emulsion (a dispersive medium: deionized water) in a weight ratio of 87.0:10.8:1.0:1.2 based on a solid content to deionized water. The silicon-carbon composite was an assembly containing Si, graphite, and amorphous carbon (pitch carbonization product) in a weight ratio of 30:40:30.
The slurry for forming a negative active material layer was mixed at 2000 rpm for 10 minutes by using a Thinky mixer. Subsequently, the slurry for forming a negative active material layer was coated on a Cu current collector (a thickness: 8 $\mu$m) by using a doctor blade and dried at 110 °C for 20 minutes.
A loading amount of a negative active material layer formed thereof on the Cu current collector was 13 mg cm$^{-2}$.
After the drying, a negative electrode obtained therefrom was calendared to have a target density of 1.68 g cc$^{-1}$.
Regarding the negative electrodes of Examples 3B-1 (5.5), 3B-2 (5.5), 3B-3 (5.5), and 3B-4 (5.5) having a negative active material layer on the current collector of Example 3A and the negative electrodes of Comparative Examples 1B (3.0) and 2B (5.5) having a negative active material layer on the current collector of Comparative Example 1A, an SBR content in each slurry for forming a negative electrode active material layer, areal capacity of each negative electrode, and a loading amount of each negative electrode active material layer are summarized in Table 1.

[Table 1]

| Example Nos. | SBR content in the slurry for negative electrode active material layer (wt%) | SBR content in the slurry for negative electrode active material layer ($\mu$g cm$^{-2}$) | Areal capacity of negative electrode (mAh cm$^{-2}$) | Loading amount of negative active material layer (mg cm$^{-2}$) |
|---|---|---|---|---|
| Example 3B-1 (5.5) | 0.23 | 30 | 5.5 | 13 |
| Example 3B-2 (5.5) | 0.60 | 77 | 5.5 | 13 |
| Example 3B-3 (5.5) | 0.96 | 123 | 5.5 | 13 |
| Example 3B-4 (5.5) | 1.2 | 154 | 5.5 | 13 |
| Comparative Example 1B (3.0) | 0.9 | 63 | 3.0 | 7 |
| Comparative Example 2B (5.5) | 1.2 | 154 | 5.5 | 13 |

**Reference Evaluation Example: Evaluation of Physical Properties according to Areal Capacity of Negative Electrode**

In order to determine an effect of an increase in areal capacity of a negative electrode on properties of the negative electrode, the negative electrode of Comparative Example 1B (3.0) having areal capacity of 3.0 mAh cm$^{-2}$ and the negative electrode of Comparative Example 2B (5.5) having an areal capacity of 5.5 mAh cm$^{-2}$ were evaluated as follows.

First, adhesive strength between negative active material layer and Cu current collector in the negative electrodes of Comparative Example 1B (3.0) and Comparative Example 2B (5.5) was evaluated by conducting a 180 ° peel test. The adhesive strength of the negative electrodes was measured by using a universal tester (AGS-J, Shimadzu Corp., Tokyo, Japan). The results are shown in Table 2.

In the present disclosure, an electrochemical impedance spectroscopy (EIS) analysis of negative electrode symmetric cells was conducted in order to clarify electrolyte transport behaviors through pores of the negative electrodes. The electrochemical impedance spectroscopy (EIS) analysis was conducted at an open circuit voltage (OCV) of the negative electrode symmetric cells including the negative electrodes according to examples and comparative examples, respectively within a frequency range of 100 kHz to 1 Hz with an amplitude of 20 mV by using a potentiostat (ZIVE BP2A, Won-A Tech Co., Ltd., Korea). The negative electrodes were obtained through a circular electrode punching machine (Wellcos Corporation, WCH-125) with a diameter of 14 mm, where the electrode area (d) is 1.54 cm$^2$. $R_{ion}$ was calculated by tripling a difference between 'a' and 'b' in the obtained EIS spectra, where 'a' represents the x-intercept value and 'b' signifies the $Z_{re}$ value at the point at which the slope increases sharply.

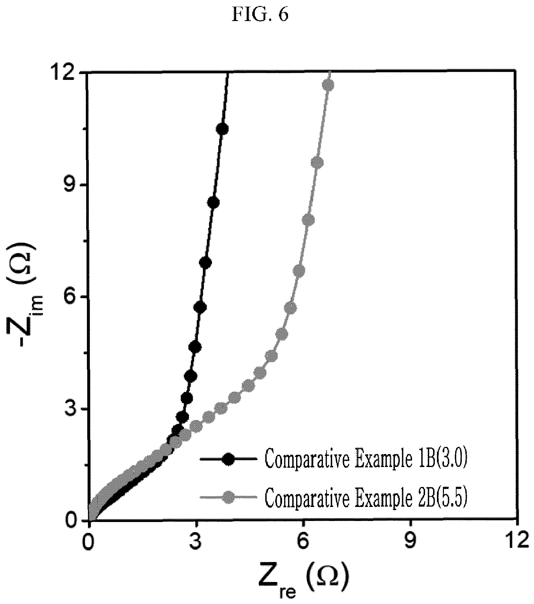

The results are shown in FIG. 6. FIG. 6 is a view showing the EIS analysis results of the symmetric cells including Comparative Example 1B (3.0) and Comparative Example 2B (5.5). Referring to FIG. 6, the negative electrode of Comparative Example 1B (3.0) exhibited $R_{ion}$ of 7.77$\Omega$, which was higher than $R_{ion}$ of 16.75 $\Omega$ of Comparative Example 2B (5.5).

In order to analyze lithium ion kinetics through the pores of the negative electrodes regardless of a thickness of the negative electrodes, the MacMullin number ($N_M$) was calculated and provided in Table 2. The MacMullin number ($N_M$) was obtained according to Equation 1:

[Equation 1]

$$N_M = \frac{R_{ion} \cdot A \cdot \sigma_0}{d} \quad (1)$$

wherein $R_{ion}$ is the ionic resistance of the electrode ($\Omega$), A is an area of an electrode (cm$^2$), $\sigma_o$ is ionic conductivity of the electrolyte (S cm$^{-1}$), and d is a thickness of the electrode ($\mu$m).

Parameters required to calculate $N_M$'s of the negative electrodes of Comparative Examples 1B (3.0) and 2B (5.5) are listed in Table 3.

[Table 2]

|  | Adhesive strength (gf mm$^{-1}$) | MacMullin number ($N_M$) |
|---|---|---|
| Comparative Example 1B (3.0) | 1.25 | 23.9 |
| Comparative Example 2B (5.5) | 1.21 | 27.1 |

[Table 3]

|  | $R_{ion}$ ($\Omega$) | A cm$^2$ | $\sigma_o$ (S cm$^{-1}$) | d ($\mu$m) |
|---|---|---|---|---|
| Comparative Example 1B (3.0) | 7.77 | 1.54 | 8.1 $\times$ 10$^{-3}$ | 42 |
| Comparative Example 2B (5.5) | 16.75 | | | 77 |

In Table 2, the ionic conductivity of the electrolyte was obtained from the electrolyte manufacturer (Starlyte from Panax Etec Co., Ltd., Busan, Korea). The electrode thickness was measured using a micrometer (SM293-025, Sincon).

Referring to Table 2, as the negative electrodes had a higher areal capacity, the SBR binder behaviors were more severe due to an increase thickness of the negative electrodes. Accordingly, since adhesion was reduced due to lack of the SBR binder on the contact surface between the negative active material layer and the current collector, the binder was more required for the negative electrodes. However, an increased amount of the binder may affect Li-ion kinetics as well as mechanical characteristics of the negative electrodes.

Referring to Table 2, the negative electrode of Comparative Example 1B (3.0) exhibited $N_M$ of 23.9, the negative electrode of Comparative Example 2B (5.5) exhibited $N_M$ of 27.1, wherein $N_M$ of the negative electrode of Comparative Example 2B (5.5) was higher than that of the negative electrode of Comparative Example 1B (3.0). The larger $N_M$, the worse Li-ion kinetics of the negative electrodes.

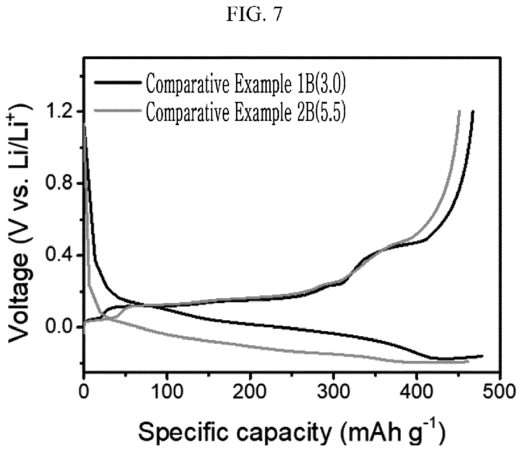

In order to analyze the effect of $N_M$ according to areal capacity of the electrodes, a charge/discharge test was performed on the half-cells respectively including the negative electrodes of Comparative Example 1B (3.0) and Comparative Example 2B (5.5). The results are shown in FIG. 7. FIG. 7 is a graph showing voltage profiles of the half-cells respectively including the negative electrodes of Comparative Example 1B (3.0) and Comparative Example 2B (5.5) at 2.0 C current density after the 0.1 C formation cycle. The 2.0 C discharge (lithiation) was terminated within a voltage range of -0.5 V, and each areal capacity was set at 3.0 and 5.5 mAh cm$^{-2}$. The negative electrode of Comparative Example 1B (3.0) exhibited excellent discharge capacity (235 mAh g$^{-1}$) to a voltage of 0 V, compared with the negative electrode (66 mAh g$^{-1}$) of Comparative Example 2B (5.5), which is caused by the result that lithium ions were advantageously intercalated into graphite due to low $N_M$.

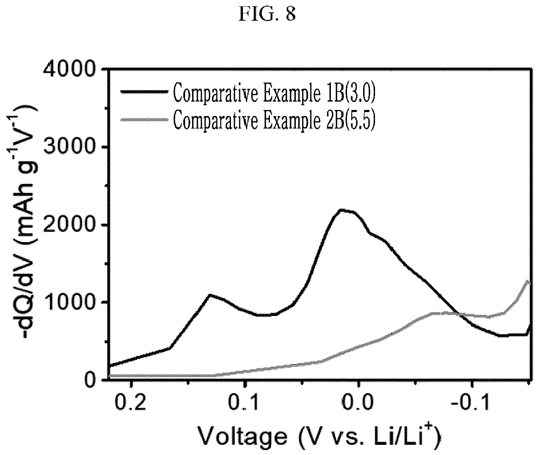

FIG. 8 shows differential capacity vs. voltage (-dQ/dV vs. V) curves of the negative electrodes with different areal capacity of 3.0 and 5.5 mAh cm$^{-2}$ at a discharge rate of 2.0 C (Comparative Example 1B (3.0) and Comparative Example 2B (5.5)).

In FIG. 8, a peak of 0 V or higher is related to Li-ion intercalation into a graphite material. The negative electrode of Comparative Example 1B (3.0) clearly exhibited the peak at 0 V or higher, which shows that Li-ions were successfully intercalated into the graphite material. On the contrary, the negative electrode of Comparative Example 2B (5.5) exhibited no peak of 0 V or higher but a lithium precipitation peak at -0.06 V due to poor Li-ion kinetics because of high $N_M$. In addition, as the negative electrode of Comparative Example 2B (5.5) became thicker in order to increase areal capacity, adhesion between the negative active material layer and the Cu current collector was deteriorated, which is presumed that severe binder migration occurred in the thick negative electrode and caused lack of binder on the contact surface of the negative active material layer and the Cu current collector. Accordingly, when the areal capacity of the negative electrode is increased in order to achieve a rechargeable lithium battery with high energy density, strategies are needed to improve Li-ion kinetics by desirable adhesion at this negative electrode.

**Evaluation Example 1: Confirmation of Binder Coating of Current Collector**

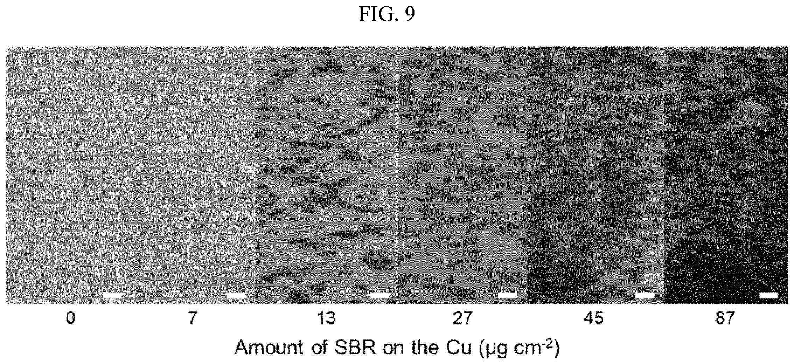

A BSE-SEM (back scattered electron-scanning electron microscope, JSM-7600F, JEOL Ltd., Tokyo, Japan) image (scale bar: 10 $\mu$m) of a Cu current collector according to an amount of SBR coated on the Cu current collector is shown in FIG. 9. FIG. 9 is a view showing BSE-SEM images of the Cu current collectors according to Comparative Example 1A and Examples 1A to 5A. In FIG. 9, a black color region indicates the coated SBR. Referring to FIG. 9, an SBR binder was present on the surface of the Cu current collectors of Examples 1A to 5A.

**Evaluation Example 2: Evaluation of Physical Properties of Negative Electrode**

The negative electrodes of Examples 1B-4, 3B-4, and 4B-4 and Comparative Example 2B were evaluated with respect to adhesive strength and electrical resistance, and the results are shown in Table 4.

[Table 4]

| | Adhesive strength (gf mm$^{-1}$) | Electrical resistance ($\Omega$) |
|---|---|---|
| Comparative Example 2B (5.5) | 1.21 | 1.40 |
| Example 1B-4 (5.5) | 1.77 | 1.46 |
| Example 3B-4 (5.5) | 2.03 | 1.52 |
| Example 4B-4 (5.5) | 2.07 | 3.13 |

Referring to Table 4, the negative electrodes of Examples 1B-4, 3B-4, and 4B-4 exhibited excellent adhesive strength, compared with the negative electrode of Comparative Example 2B, while electrical resistance did not much increase.

Adhesive strength and MacMullin number of a negative electrode according to a SBR content in the slurry for forming a negative active material layer on the current collector according to Example 3A (SBR coating of 27 $\mu$g cm$^{-2}$)

were measured, and the results are shown in Table 5. The MacMullin number is calculated according to Equation 1, and parameters required to calculate the MacMullin number of Table 5 are shown in Table 6.

[Table 5]

| Examples | SBR content in the slurry for negative electrode active material layer ($\mu$g cm$^{-2}$) | Adhesive strength (gf mm$^{-1}$) | MacMullin number ($N_M$) |
|---|---|---|---|
| Example 3B-1 (5.5) | 30 | 0.35 | 21.1 |
| Example 3B-2 (5.5) | 77 | 1.19 | 24.1 |
| Example 3B-3 (5.5) | 123 | 1.82 | 26.0 |

[Table 6]

| Examples | $R_{ion}$ ($\Omega$) | A cm$^2$ | $\sigma_o$ (S cm$^{-1}$) | d ($\mu$m) |
|---|---|---|---|---|
| Example 3B-1 (5.5) | 12.80 | | | |
| Example 3B-2 (5.5) | 14.78 | 1.54 | $8.1 \times 10^{-3}$ | 77 |
| Example 3B-3 (5.5) | 15.80 | | | |

In Table 6, the ionic conductivity of the electrolyte was obtained from the electrolyte manufacturer (Starlyte from Panax Etec Co., Ltd., Busan, Korea). The electrode thickness was measured using a micrometer (SM293-025, Sincon).

Referring to Table 5, the larger SBR content included in the slurry for forming a negative active material layer, the larger the MacMullin number, but as the SBR content included in the slurry for forming a negative active material layer was larger, the adhesive strength was improved.

The negative electrode of Example 3B-2 (5.5) and the negative electrode of Comparative Example 2B (5.5) were measured with respect to resistance, adhesive strength, and the MacMullin number, and the results are shown in Table 7. The MacMullin number was calculated according to Equation 1, and parameters required to calculate the MacMullin number of Table 7 are shown in Table 8.

[Table 7]

| | Resistance ($\Omega$) | Adhesive strength (gf mm$^{-1}$) | MacMullin number ($N_M$) |
|---|---|---|---|
| Example 3B-2 (5.5) | 1.36 | 1.19 | 24.1 |
| Comparative Example 2B (5.5) | 1.40 | 1.21 | 27.1 |

[Table 8]

| | $R_{ion}$ ($\Omega$) | A cm$^2$ | $\sigma_o$ (S cm$^{-1}$) | d ($\mu$m) |
|---|---|---|---|---|
| Example 3B-2 (5.5) | 14.78 | 1.54 | $8.1 \times 10^{-3}$ | 77 |
| Comparative Example 2B (5.5) | 16.75 | | | |

In Table 8, the ionic conductivity of the electrolyte was obtained from the electrolyte manufacturer (Starlyte from Panax Etec Co., Ltd., Busan, Korea). The electrode thickness was measured using a micrometer (SM293-025, Sincon).

Referring to Table 7, the negative electrode of Example 3B-2 (5.5), in which a negative active material layer was in direct contact with a Cu current collector coated with a binder, exhibited a little low electrical resistance, compared with the negative electrode of Comparative Example 2B (5.5).

In addition, the negative electrode of Comparative Example 2B (5.5) used an SBR amount of 154 $\mu$g cm$^{-2}$ for

forming a negative active material layer, and the negative electrode of Example 3B-2 (5.5) used a total SBR amount (SBR amounts in a current collector and slurry) of 104 $\mu$g cm$^{-2}$, which was greater than or equal to 30% smaller than of that of the negative electrode of Comparative Example 2B (5.5). Nevertheless, the negative electrode of Example 3B-2 (5.5) exhibited similar adhesion to the negative electrode of Comparative Example 2B (5.5). SBR in the slurry for forming a negative active material layer was 50% reduced (77 $\mu$g cm$^{-2}$), compared with that (154 $\mu$g cm$^{-2}$) in Comparative Example 2B (5.5), which shows that $N_M$ was improved (the $N_M$ number decreased) and accordingly, confirms that Li-ion kinetics of the negative electrode through pores were improved.

**Evaluation Example 3: Electrolyte permeability of negative electrode**

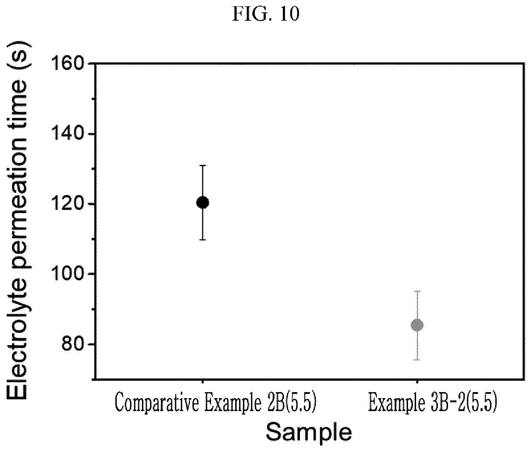

In order to conduct an electrolyte permeability test of the negative electrodes according to Example 3B-2 (5.5) and Comparative Example 2B (5.5), 20 mg of the electrolyte (PANAX StarLyte, a solution prepared by adding a 10 wt% of an fluoroethylene carbonate (FEC) additive to ethylene carbonate/dimethyl carbonate/diethyl carbonate (EC/DMC/DEC =1/1/2 volume ratio) containing 1.5 M LiPF$_6$) was dropped on the negative electrode surfaces of Example 3B-2 (5.5) and Comparative Example 2B (5.5). Herein, the time taken until the electrolyte was completely permeated into each of the negative electrodes was measured. The results are shown in FIG. 10. FIG. 10 is a view showing the electrolyte permeability evaluation results of the negative electrodes of Example 3B-2 (5.5) and Comparative Example 2B (5.5).

In general, electrolyte permeability is closely related to binder and pore distributions of a negative electrode, which plays an important role in electrochemical characteristics.

A binder on the negative electrode surface may limit electrolyte transfer through pores of the negative electrode to slow down a rate of Li-ion kinetics and deteriorate electrochemical performance of rechargeable lithium batteries.

Referring to FIG. 10, the negative electrode of Example 3B-2 (5.5) exhibited electrolyte penetration time of 85.4 seconds, which was lower than negative electrode (120.4 seconds) of Comparative Example 2B (5.5). This may be caused by easy electrolyte behaviors through pores of the negative electrode surface according to Example 3B-2 (5.5) where SBR was less included than the negative electrode of Comparative Example 2B (5.5).

Accordingly, the negative electrode of Example 3B-2 (5.5) exhibited a little improved electrical conductivity and adhesive strength and significantly improved Li-ion kinetics, compared with the negative electrode of Comparative Example 2B (5.5).

**Examples 1H-1 (5.5) to 5H-3 (5.5) and Comparative Example 2H (5.5):**

**Preparation of Half-cells**

Each of the electrodes according to Example 1B-1 (5.5) to 5B-3(5.5) and Comparative Example 2B (5.5), before being manufactured into a half-cell, was dried at 120 °C for 4 hours. The half-cell was manufactured by using a lithium metal (a thickness: 200 $\mu$m) as a counter electrode into each (2032 circular) coin-type half-cell according to Examples 1H-1 (5.5) to 5H-3 (5.5) and Comparative Example 2H (5.5).

**Evaluation Example 4: Electrochemical Properties of Half-cells**

The coin-type half-cells were evaluated with respect to electrochemical characteristics by using a battery cycle tester (TOSCAT 3000, Toyo System Co., Ltd., Tokyo, Japan).

Each of the half-cells according to Examples 3H-2(5.5) and Comparative Example 2H (5.5) was measured within a voltage range of 0.01 to 1.2 V vs. Li/Li$^+$ with respect to charge capacity and coulomb efficiency from the voltage profiles at the first 0.1 C cycle.

As a result, the half-cell of Example 3H-2 (5.5) exhibited charge (delithiation) capacity of 444.0 mAh g$^{-1}$ and coulomb efficiency of 89.3%, which were almost the same as charge capacity of 440.1 mAh g$^{-1}$ and coulomb efficiency of 89.3% of the half-cell of Comparative Example 2H (5.5) due to low current density of 0.1 C.

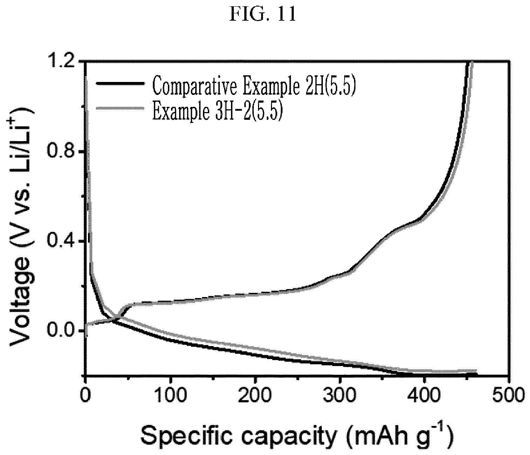

The voltage profiles of the half-cells of Example 3H-2 (5.5) and Comparative Example 2H (5.5), when charged a high current density of 2.0 C, are shown in FIG. 11. FIG. 11 is a view showing voltage profiles of the half-cells of Examples 3H-2 (5.5) and Comparative Example 2H (5.5), when discharged at a high current density of 2.0 C. Referring to FIG. 11, the half-cell of Example 3H-2 (5.5) exhibited a lower overpotential than the half-cell of Comparative Example 2H (5.5).

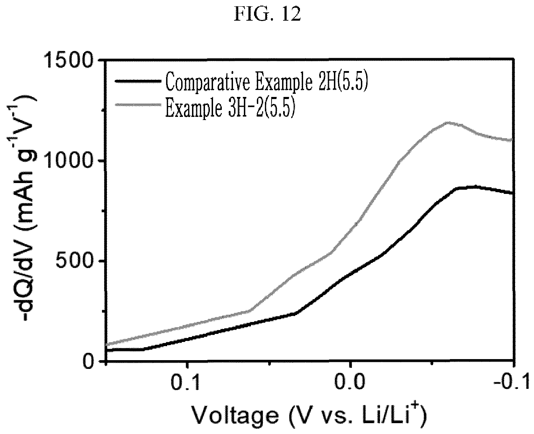

In order to analyze discharge behaviors of the half-cells of Example 3H-2 (5.5) and Comparative Example 2H (5.5), dQ/dV vs. V curves at a high discharge rate of 2.0 C were analyzed. The results are shown in FIG. 12. Referring to FIGS. 11 and 12, no clear intercalation peak of lithium ions into a graphite material appeared due to the high discharge rate of 2.0 C, but a lower overpotential and higher intensity were observed in the half-cell of Example 3H-2 (5.5) than in the half-cell of Comparative Example 2H (5.5). This confirms that electrochemical properties were improved during the 2.0 C discharge.

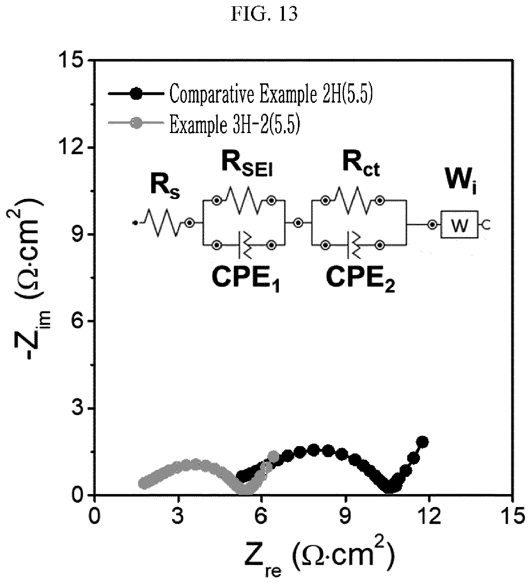

Electrochemical impedance spectra (EIS) of the half-cells of Example 3H-2 (5.5) and Comparative Example 2H (5.5) were evaluated after the 0.1 C formation cycle. The electrochemical impedance spectroscopy (EIS) analysis was performed by using potentiostat (ZIVE BP2A, Won-A Tech Co., Ltd., Korea) at an open circuit voltage (OCV) of each cell within a frequency range of 100 kHz to 1 Hz with amplitude of 20 mV. The results are shown in FIG. 13. FIG. 13 is a view showing the EIS analysis results of the half-cells of Example 3H-2 (5.5) and Comparative Example 2H (5.5). The half-cell of Example 3H-2 (5.5) exhibited much lower solution resistance ($R_s$) and charge transfer resistance ($R_{ct}$) than the half-cell of Comparative Example 2H (5.5). Since the negative electrode of Example 3B-2 (5.5) and the negative electrode of Comparative Example 2B (5.5) exhibited similar adhesion and electrical resistance, the improved discharge characteristics of Example 3H-2 (5.5) at the high current density of 2.0 C were considered to be caused by increased Li-ion kinetics due to the low amount of SBR at the negative electrode rather than improvement of mechanical characteristics and/or electrical conductivity of the electrode.

**Examples 1F-1 (5.5) to 5F-3 (5.5) and Comparative Example 2F (5.5):**

**Preparation of Full-cells**

Each of the electrodes of Example 1B-1 (5.5) to 5B-3(5.5) and Comparative Example 2B (5.5), before being manufactured into a full-cell, was dried at 120 °C for 4 hours under vacuum. $LiNi_{0.8}Co_{0.1}Al_{0.1}O_2$ (NCA), a PVdF binder, and carbon black were mixed in N-methyl pyrrolidone at a weight ratio of 97:1.5:1.5 to prepare a slurry for forming a positive electrode active material layer, and then coated on an Al foil, dried, and compressed to manufacture a positive electrode having an areal capacity of 5 mAh cm$^{-2}$. Each full-cell according to Examples 1F-1 (5.5) to 5F-3 (5.5) and Comparative Example 2F (5.5) was manufactured at an N/P ratio of 1.1 using the positive electrode and each negative electrode prepared in each of the negative electrodes of Examples 1B-1 (5.5) to 5B-3 (5.5) and Comparative Example 2B (5.5).

**Examples 1F-1 (3.0) to 5F-3 (3.0) and Comparative Example 1F (3.0):**

**Preparation of Full-cells**

Each of the electrodes of Examples 1B-1 (3.0) to 5B-3 (3.0) and Comparative Example 1B (3.0), before being manufactured into a full-cell, was dried at 130 °C for 4 hours under vacuum. $LiNi_{0.8}Co_{0.1}Al_{0.1}O_2$ (NCA), a PVdF binder, and carbon black were mixed in N-methyl pyrrolidone at a weight ratio of 97:1.5:1.5 to prepare a slurry for forming a positive electrode active material layer, and then coated on an Al foil, dried, and compressed to manufacture a positive electrode having an areal capacity of 5 mAh cm$^{-2}$. Each full-cell according to Examples 1F-1 (3.0) to 5F-3 (3.0) and Comparative Example 1F (3.0) was manufactured at an N/P ratio of 1.1 using the positive electrode and each negative electrode prepared in each of the negative electrodes of Example 1B-1 (3.0) to 5B-3 (3.0) and Comparative Example 1B (3.0).

**Evaluation Example 5: Evaluation of high-rate charging characteristics of Full-cell**

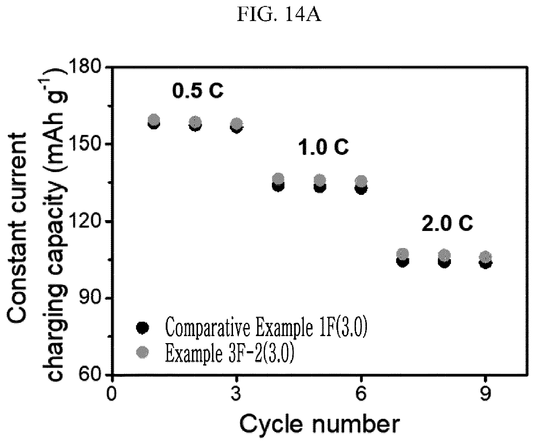

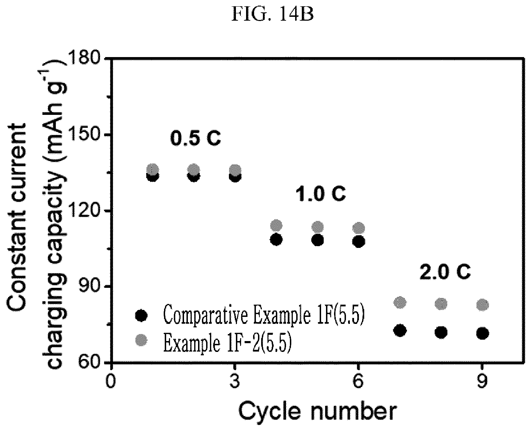

A high-rate charging test was conducted by changing a charge rate from 0.5 C to 2.0 C, while maintaining a discharge rate of 0.5 C after the 0.1 C formation cycle. The results are shown in FIGS. 14A and 14B. FIG. 14A is a graph showing charge capacity at each rate of the full-cells of Example 3F-2 (3.0) and Comparative Example 1F (3.0), and FIG. 14B is a graph showing charge capacity at each rate of the full-cells of Example 3F-2 (5.5) and Comparative Example 2F (5.5). Referring to FIG. 14A, the full-cell of Example 3F-2 (3.0) exhibited charge capacity of 158.3 mAh g$^{-1}$, 134.0 mAh g$^{-1}$, and 104.5 mAh g$^{-1}$ at each charging rate of 0.5 C, 1.0 C, and 2.0 C, which were a little higher those of the full-cell of Comparative Example 1F (3.0).

Referring to FIG. 14B, the full-cell of Example 3F-2 (5.5) exhibited much higher constant current (CC) charge capacity than the full-cell of Comparative Example 2F (5.5), wherein as the charge C-rate increased, the capacity difference became more noticeable. This shows that since the negative electrode of Example 3B-2 (5.5) exhibited high areal capacity and excellent charge characteristics at a C-rate due to excellent Li-ion transport capability, the negative electrode of Example 3B-2 (5.5) is suitable for a rechargeable lithium battery with high energy density.

**Evaluation Example 6: Evaluation of Cycle-life Characteristics of Full-cell**

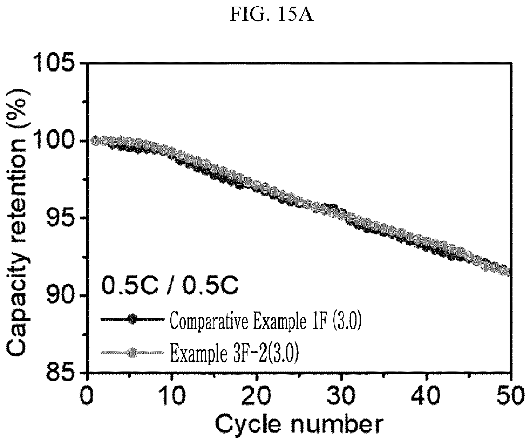

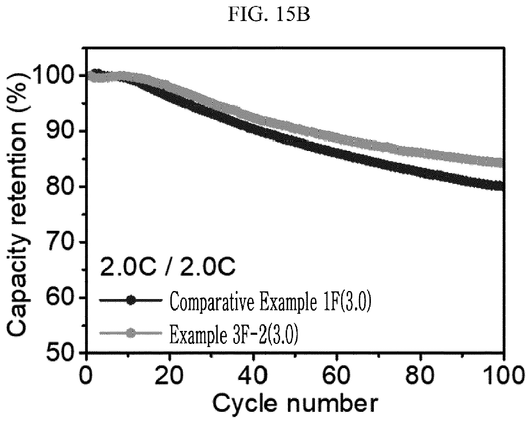

In order to evaluate cycle-life characteristics, the full-cells of Example 3F-2 (3.0) and Comparative Example 1F (3.0) were 100 cycles charged and discharged at 0.5 C after the 0.1 C formation cycle, and the results are shown in FIG. 15A, and after 100 cycles charging and discharging the cells at 2.0 C, the results are shown in FIG. 15B. FIGS. 15A and 15B are graphs showing cycle-life characteristics of the full-cells of Example 3F-2 (3.0) and Comparative Example 1F (3.0) at 0.5 C and 2.0 C.

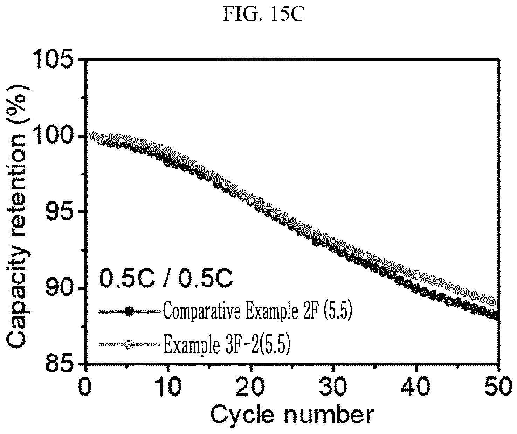

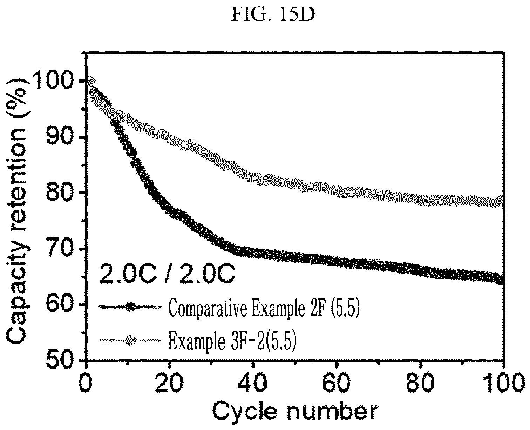

In addition, the full-cells of Example 3F-2 (5.5) and Comparative Example 2F (5.5) were 100 cycles charged and discharged at 0.5 C after the 0.1 C formation cycle, and the results are shown in FIG. 15C, and after 100 cycles charging and discharging the cells at 2.0 C, the results are shown in FIG. 15D. FIGS. 15C and 15D are graphs showing cycle-life characteristics of the full-cells of Example 3F-2 (5.5) and Comparative Example 2F (5.5) at 0.5 C and 2.0 C.

Referring to FIG. 15A, the full-cells of Example 3F-2 (3.0) and Comparative Example 1F (3.0) exhibited almost the same capacity retention of 91.5% for 50 cycles. Referring to FIG. 15B, the full-cell of Example 3F-2 (3.0) exhibited capacity retention of 84.2% for the 100 cycles at a high current density of 2.0 C, which was 5% or more improved than the full-cell (80.0%) of Comparative Example 1F (3.0).

Referring to FIG. 15C, each of the full-cells of Example 3F-2 (5.5) and Comparative Example 2F (5.5) exhibited similar capacity retention of 88.2% and 89.0% for the 50 cycles at 0.5 C. The reason is that Li ions were more easily transferred at a lower C-rate. Referring to FIG. 15D, the full-cell of Example 3F-2 (5.5) exhibited deteriorated capacity at the initial cycles but capacity retention of 82.7% at the 40th cycle. However, the full-cell of Example 3F-2 (5.5) exhibited excellent stability after the 40th cycle and capacity retention of 78.3% at the 100th cycle. Comparatively, the full-cell of Comparative Example 2F (5.5) exhibited continuous capacity deterioration and capacity retention of 69.3% at the 40th cycle and capacity retention of 64.3% at the 100th cycle. This result confirms that Li-ion kinetics were improved by using the negative electrode of Example 3B-2 (5.5) to reduce an amount of SBR in the negative active material layer and particularly, electrochemical performance was improved at high areal capacity of 5.5 mAh cm$^{-2}$ and current density of 2.0 C.

The electronic device, vehicle, and/or the battery, e.g., a battery controller, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

While this disclosure has been described in connection with what is presently considered to be practical example embodiments, it is to be understood that the invention is not limited to the disclosed embodiments. On the contrary, it is intended to cover various modifications and equivalent arrangements included within the scope of the appended claims.

**<Description of Symbols>**

| | | | |
|---|---|---|---|
| 100: | rechargeable lithium battery | 10: | positive electrode |
| 11: | positive electrode lead tab | 12: | positive terminal |
| 20, 20': | negative electrode | 20a, 20a': | current collector |
| 20b, 20b': | negative active material layer | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

**Claims**

1. A current collector for a rechargeable lithium battery, comprising a substrate and a binder coating layer on a surface of the substrate, wherein the binder coating layer includes a water-soluble binder selected from a rubber-based binder, a polymer resin binder, or a combination thereof.

2. The current collector of claim 1, wherein
the current collector includes a copper foil, a nickel foil, a stainless steel foil, a titanium foil, a polymer substrate coated with a conductive metal, or an aluminium foil.

3. The current collector of claim 1 or claim 2, wherein
the rubber-based binder includes a styrene-butadiene rubber, an acrylated styrene-butadiene rubber, an acrylonitrile-butadiene rubber, an acrylic rubber, a butyl rubber, a fluorine rubber, or a combination thereof.

4. The current collector of any one of claims 1 to 3, wherein
the polymer resin binder includes polyethylene oxide, polyvinylpyrrolidone, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, or a combination thereof.

5. The current collector of any one of claims 1 to 4, wherein the water-soluble binder is coated on the substrate in an amount of about 5 to about 40 $\mu$g cm$^{-2}$.

6. The current collector of any one of claims 1 to 5, wherein

   the coating layer is a patterned coating layer, optionally wherein
   the pattern is island-shaped, linear, or wavy-shaped.

7. The current collector of any one of claims 1 to 6, wherein
the coating layer is formed by coating a slurry for a current collector in which a water-soluble binder is dispersed in an aqueous solvent.

8. An electrode for a rechargeable lithium battery, comprising

   the current collector according to any one of claims 1 to 7, and
   an electrode active material layer on the current collector,
   wherein the electrode active material layer includes an electrode active material and a polymer binder, and
   the polymer binder includes a water-soluble binder and an ionic polymer.

9. The electrode of claim 8, wherein
the water-soluble binder is a rubber-based binder, a polymer resin binder, or a combination thereof.

10. The electrode of claim 9, wherein:

    (i) the rubber-based binder includes a styrene-butadiene rubber, an acrylated styrene-butadiene rubber, an acrylonitrile-butadiene rubber, an acrylic rubber, a butyl rubber, a fluorine rubber, or a combination thereof; and/or
    (ii) the polymer resin binder includes polyethylene oxide, polyvinylpyrrolidone, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, or a combination thereof.

11. The electrode of claim 9 or claim 10, wherein
the ionic polymer includes carboxylmethyl cellulose, hydroxypropylmethyl cellulose, methyl cellulose, an alkali metal salt thereof, or a combination thereof.

12. The electrode of any one of claims 9 to 11, wherein
the polymer binder is included in an amount of about 0.1 wt% to about 10 wt% based on 100 wt% of the electrode active material layer.

13. The electrode of any one of claims 9 to 12, wherein

the ionic polymer is included in an amount of about 0.1 wt% to about 3 wt% based on 100 wt% of the electrode active material layer.

14. The electrode of any one of claims 9 to 12, wherein
the electrode has a MacMullin number ($N_M$) calculated using Equation 1 of less than or equal to about 26:
[Equation 1]

$$N_M = \frac{R_{ion} \cdot A \cdot \sigma_0}{d} \quad (1)$$

wherein $R_{ion}$ is the ionic resistance of the electrode ($\Omega$), A is an area of the electrode ($cm^2$), $\sigma_o$ is the ionic conductivity of an electrolyte ($S\ cm^{-1}$), and d is the thickness of the electrode ($\mu m$).

15. A rechargeable lithium battery comprising the electrode manufactured according to any one of claim 9 to 14.

FIG. 1A

Graphite/Si-C

Water

SBR

Drying

Graphite/SCN

SBR

20b'
20a'
20'

20b'
20a'
20'

FIG. 1B

Graphite/Si-C

SBR

Water

Casting

Drying

20b

20a

20 { 20b 20a

20a

FIG. 2

EP 4 358 171 A1

**FIG. 3**

100

FIG. 4

FIG. 5

FIG. 6

FIG. 7

FIG. 8

FIG. 9

Amount of SBR on the Cu (µg cm⁻²)

EP 4 358 171 A1

FIG. 10

FIG. 11

FIG. 12

FIG. 13

FIG. 14A

FIG. 14B

FIG. 15A

FIG. 15B

FIG. 15C

FIG. 15D

Europäisches
Patentamt

European
Patent Office

Office européen
des brevets

## EUROPEAN SEARCH REPORT

Application Number

EP 23 20 4810

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 559 818 B2 (SAMSUNG SDI CO LTD [KR]) 11 February 2020 (2020-02-11) * claim 9; example 1 * | 1-4,7,15 | INV. H01M4/04 H01M4/36 H01M4/62 |
| X | US 2020/083542 A1 (YUSHIN GLEB [US] ET AL) 12 March 2020 (2020-03-12) * paragraphs [0038], [0039], [0053], [0067]; claim 2; figure 7 * | 1-15 | H01M4/66 H01M4/70 H01M10/0525 |
| X | US 2018/151884 A1 (YUSHIN GLEB [US] ET AL) 31 May 2018 (2018-05-31) * paragraph [0127]; claims 1,15,17 * | 1,2,4, 7-10,15 | ADD. H01M4/133 H01M4/134 H01M4/1393 H01M4/1395 H01M4/38 H01M4/587 |

| TECHNICAL FIELDS SEARCHED (IPC) |
|---|
| H01M |

The present search report has been drawn up for all claims

| Place of search | Date of completion of the search | Examiner |
|---|---|---|
| Munich | 15 March 2024 | Steinreiber, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 20 4810**

This annex lists the patent family members relating to the patent documents cited in the above-mentioned European search report.
The members are as contained in the European Patent Office EDP file on
The European Patent Office is in no way liable for these particulars which are merely given for the purpose of information.

**15-03-2024**

| Patent document cited in search report | | Publication date | Patent family member(s) | | Publication date |
|---|---|---|---|---|---|
| US 10559818 | B2 | 11-02-2020 | KR | 20180013105 A | 07-02-2018 |
| | | | US | 2018034047 A1 | 01-02-2018 |
| US 2020083542 | A1 | 12-03-2020 | CN | 112956052 A | 11-06-2021 |
| | | | US | 2020083542 A1 | 12-03-2020 |
| | | | US | 2022416256 A1 | 29-12-2022 |
| | | | WO | 2020051560 A1 | 12-03-2020 |
| US 2018151884 | A1 | 31-05-2018 | CN | 110235286 A | 13-09-2019 |
| | | | EP | 3545575 A1 | 02-10-2019 |
| | | | KR | 20190086548 A | 22-07-2019 |
| | | | US | 2018151884 A1 | 31-05-2018 |
| | | | US | 2023015653 A1 | 19-01-2023 |
| | | | WO | 2018098506 A1 | 31-05-2018 |

EPO FORM P0459

For more details about this annex : see Official Journal of the European Patent Office, No. 12/82